# EUROPÄISCHE PATENTSCHRIFT

(11) **EP 3 032 305 B1**
(45) Veröffentlichungstag und Bekanntmachung des Hinweises auf die Patenterteilung: **25.03.2020**
(21) Anmeldenummer: 15198657.7
(22) Anmeldetag: 09.12.2015
(51) Int. Cl.: G02B 7/182, G02B 27/01

(54) **SPIEGELELEMENT FÜR EINE KOPF-OBEN-ANZEIGEVORRICHTUNG EINES KRAFTFAHRZEUGS, ANZEIGEVORRICHTUNG, KRAFTFAHRZEUG SOWIE VERFAHREN**
MIRROR ELEMENT FOR A HEADS UP DISPLAY DEVICE OF A MOTOR VEHICLE, DISPLAY DEVICE, MOTOR VEHICLE AND METHOD
MIROIR ELEMENT POUR DISPOSITIF D'AFFICHAGE A TETE HAUTE D'UN VEHICULE AUTOMOBILE, DISPOSITIF D'AFFICHAGE, VEHICULE AUTOMOBILE ET PROCEDE

(30) Priorität: 09.12.2014 DE 102014118182
(43) Veröffentlichungstag der Anmeldung: 15.06.2016
(73) Patentinhaber: Valeo Comfort and Driving Assistance, 94046 Créteil Cedex (FR)
(72) Erfinder: Kuntze, Daniel, 74321 Bietigheim-Bissingen (DE); Lars, Schoch, 74321 Bietigheim-Bissingen (DE); Simonis, Karl, 74321 Bietigheim-Bissingen (DE)

(56) Entgegenhaltungen:
- EP-A2- 0 836 107
- DE-U1- 29 722 304
- JP-A- H0 834 627
- US-A1- 2009 086 329

## Beschreibung

Die vorliegende Erfindung betrifft ein Spiegelelement für eine Kopf-oben-Anzeigevorrichtung eines Kraftfahrzeugs, wobei das Spiegelelement eine semitransparente Spiegelfläche aufweist, das Spiegelelement zumindest teilweise aus einem Glas gebildet ist und das Spiegelelement einen Haltebereich aufweist, an welchem eine Halteeinrichtung der Anzeigevorrichtung anordenbar ist. Die Erfindung betrifft außerdem eine Anzeigevorrichtung mit einem solchen Spiegelelement. Zudem betrifft die vorliegende Erfindung ein Kraftfahrzeug mit einer solchen Anzeigevorrichtung. Schließlich betrifft die vorliegende Erfindung ein Verfahren zum Herstellen einer Kopf-oben-Anzeigevorrichtung.

Das Interesse richtet sich vorliegend auf Anzeigevorrichtungen für Kraftfahrzeuge, die als Kopf-oben-Anzeigevorrichtungen beziehungsweise als Head-up Displays ausgebildet sind. Eine derartige Anzeigevorrichtung umfasst üblicherweise eine Bilderzeugungseinrichtung, mit der Licht abgestrahlt werden kann. Ferner umfasst die Anzeigevorrichtung eine Optikeinrichtung, welche beispielsweise einen oder mehrere Spiegel umfassen kann. Mit der Optikeinrichtung kann das von der Bilderzeugungseinrichtung abgestrahlte Licht auf ein Anzeigeelement projiziert werden. Das Anzeigeelement weist eine semitransparente Spiegelfläche auf. Diese semitransparente Spiegelfläche kann beispielsweise durch einen Bereich der Windschutzscheibe des Kraftfahrzeugs bereitgestellt werden. Ferner sind Anzeigevorrichtungen bekannt, die ein separates Spiegelelement mit einer semitransparenten Spiegelfläche aufweisen. Solche Spiegelelemente können auch als Combinerspiegel bezeichnet werden. Durch eine Überlagerung der auf das Spiegelelement projizierten Information, welche von diesem reflektiert wird, mit einer durch das Spiegelelement hindurch scheinenden Information aus einer hinter dem Spiegelelement gelegenen Umgebung kann somit ein virtuelles Bild beziehungsweise eine virtuelle Anzeige bereitgestellt werden.

Aus dem Stand der Technik sind beispielsweise Spiegelelemente beziehungsweise Combinerspiegel bekannt, die aus einem transparenten Kunststoff oder aus Glas gefertigt sind. Die Spiegelelemente, welche aus Kunststoff bestehen, sind beispielsweise aus Polycarbonat (PC) oder aus Polymethylmethacrylat (PMMA) gefertigt. Die Spiegelelemente, welche aus Kunststoff gefertigt sind, weisen den Vorteil auf, dass diese einfach und kostengünstig hergestellt werden können. So können beispielsweise unterschiedliche Konturen in einem Haltebereich des Spiegelelements bereitgestellt werden, an welchem eine Halteeinrichtung der Anzeigevorrichtung angebracht werden kann. Mit der Halteeinrichtung kann das Spiegelelement gehalten werden. Die Halteeinrichtung kann auch Teil einer Kinematik sein, mittels welcher das Spiegelelement von einer Verstaustellung in eine Gebrauchsstellung und umgekehrt bewegt werden kann.

Bei Combinerspiegeln beziehungsweise Spiegelelementen, die aus Glas gefertigt sind, können diese Konturen im Haltebereich nur in Verbindung mit hohen Kosten bereitgestellt werden. Diese Konturen können beispielsweise aus engen Radien, Bohrungen, Kerben oder dergleichen bestehen. Dies hat zur Folge, dass sich bei Combinerspiegeln der Einsatz von Glas gegenüber Kunststoff als Material oft nicht rechnet. Dabei hat Glas als Material für Spiegelelemente beispielsweise haptische, mechanische und/oder physikalische Vorteile. Zurzeit werden bei Spiegelelementen aus Glas diese ungünstigen Konturen gefräst und/oder das Glas wird entsprechend geklebt beziehungsweise geschraubt oder geklemmt. Um den Combinerspiegel in seine Endform zu bringen, werden entsprechende Grundkörper aus Glas mittels Press- oder Schwerkraftbiegen in Form gebracht. Grundsätzlich besteht auch die Möglichkeit, den kompletten Combinerspiegel mittels eines Fräsverfahrens herzustellen. Ein Fräsverfahren ist jedoch für den Einsatz von großen Stückzahlen und im Hinblick auf die Kosten nicht geeignet.

In diesem Zusammenhang beschreibt die JP 2000 019 449 A2 einen Combinerspiegel für ein Head-up Display, der eine Glasplatte umfasst. Diese Glasplatte ist mit einem Kunststoff umspritzt. Auf diese Weise kann eine Halteeinrichtung zum Halten des Combinerspiegels bereitgestellt werden. Weitere Combinerspiegel mit Halteeinrichtungen sind aus US 2009/0086329 A1 und EP 0 836 107 A2 bekannt.

Es ist Aufgabe der vorliegenden Erfindung, eine Lösung aufzuzeigen, wie eine kostengünstigere Anzeigevorrichtung, insbesondere eine Kopf-oben-Anzeigevorrichtung, mit einem Spiegelelement aus Glas bereitgestellt werden kann.

Diese Aufgabe wird erfindungsgemäß durch ein Spiegelelement, durch eine Anzeigevorrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Spiegelelement für eine Anzeigevorrichtung, insbesondere eine Kopf-oben-Anzeigevorrichtung, eines Kraftfahrzeugs weist eine semitransparente Spiegelfläche auf. Ferner ist das Spiegelelement zumindest teilweise aus einem Glas gebildet. Zudem weist das Spiegelelement einen Haltebereich auf, an welchem eine Halteeinrichtung der Anzeigevorrichtung anordenbar ist. Des Weiteren weist das Spiegelelement in dem Haltebereich wenigstens ein eingeformtes Befestigungselement auf, welches als Erhebung und/oder als Ausnehmung ausgebildet ist.

Das Spiegelelement kann in einer Anzeigevorrichtung eines Kraftfahrzeugs verwendet werden. Insbesondere kann das Spiegelelement in einer sogenannten Kopf-oben-Anzeigevorrichtung beziehungsweise in einem Head-up Display eingesetzt werden. Das Spiegelelement kann auch als Combinerspiegel oder Combiner bezeichnet werden. Das Spiegelelement kann ein Spiegel mit einer semitransparenten Spiegelfläche sein. Das Spiegelelement kann also nicht nur reflektieren, sondern auch transmittieren, sodass reflektiertes und transmittiertes Licht überlagert wird. Das Spiegelelement ist aus einem Glas, insbesondere einem Mineralglas, gebildet. Insbesondere ist das Spiegelelement vollständig aus Glas gebildet. Das Spiegelelement weist einen Haltebereich auf, an welchem er mit einer Halteeinrichtung der Anzeigevorrichtung gehalten werden kann.

Der Combinerspiegel beziehungsweise das Spiegelelement weist in dem Haltebereich zumindest ein Befestigungselement auf, welches in das Spiegelelement beziehungsweise einen Grundkörper des Spiegelelements eingeformt ist. Das Spiegelelement kann auch eine Mehrzahl von Befestigungselementen aufweisen. Diese Befestigungselemente sind nur in dem Haltebereich des Spiegelelements angeordnet. Diese Befestigungselemente dienen dazu, die mechanische Befestigung der Haltevorrichtung an dem Spiegelelement zu verbessern. Durch die Befestigungselemente kann beispielsweise die Reibung zwischen dem Spiegelelement und der Halteeinrichtung erhöht werden. Damit kann verhindert werden, dass sich das Spiegelelement aus der Halteeinrichtung löst oder dass das Spiegelelement in der Halteeinrichtung verdreht wird.

Erfindungsgemäß ist das wenigstens eine Befestigungselement auf einer ersten Seite des Spiegelelements als Erhebung und auf einer der ersten Seite gegenüberliegenden, zweiten Seite des Spiegelelements als Ausnehmung ausgebildet. Das Spiegelelement kann im Wesentlichen plattenförmig ausgebildet sein. Die Befestigungselemente auf der ersten Seite des Spiegelelements können als Erhebungen und die Befestigungselemente auf der zweiten Seite des Spiegelelements können alle als Ausnehmungen ausgebildet sein. Derartige Befestigungselemente lassen sich beispielsweise dadurch herstellen, dass ein Werkzeug, welches entsprechende Strukturen aufweist, in das Glas gedrückt wird, welches eine Temperatur über der Glasübergangstemperatur aufweist. Durch die Strukturen des Werkzeugs kann das Glas lokal umgeformt werden. Somit können die Befestigungselemente auf einfache und kostengünstige Weise hergestellt werden.

In einer weiteren Ausgestaltung ist das wenigstens eine Befestigungselement als Mikrostruktur ausgebildet. Mit anderen Worten weisen die Befestigungselemente Abmessungen im Mikrometerbereich auf. Damit können viele dieser Befestigungselemente in dem Haltebereich des Spiegelelements vorgesehen sein. Somit kann die mechanische Verbindung zwischen dem Spiegelelement und der Halteeinrichtung verbessert werden.

Bevorzugt ist der Haltebereich genau einem Randbereich des Spiegelelements zugeordnet. Der Combinerspiegel beziehungsweise das Spiegelelement kann mehrere Randbereiche aufweisen. Beispielsweise kann das Spiegelelement vier Randbereiche aufweisen. Das Spiegelelement wird nur in dem Haltebereich von der Halteeinrichtung gehalten. Der von dem Haltebereich verschiedene Bereich des Spiegelelements ist insbesondere frei von Befestigungselementen. Das zumindest eine Befestigungselement kann auch als längliche Nut ausgebildet sein. Das zumindest eine Befestigungselement kann sich im Wesentlichen parallel zu dem Randbereich erstrecken. Somit weist das Spiegelelement keine Einrichtung auf, die beispielsweise rahmenförmig ausgebildet ist. Dies ermöglicht es, eine ideale Anzeige für einen Fahrzeuginsassen, insbesondere den Fahrer des Kraftfahrzeugs, bereitzustellen.

In einer weiteren Ausführungsform weist das Spiegelelement ein Justageelement zum Justieren eines Werkzeugs auf. Dieses Justageelement ist insbesondere innerhalb des Haltebereichs angeordnet. Das Justageelement kann ebenfalls als Erhebung oder als Ausnehmung ausgebildet sein. Das Spiegelelement kann auch mehrere Justageelemente aufweisen. Durch das Justageelement wird eine Referenz bereitgestellt, an welcher beispielsweise Werkzeuge für Folgeprozesse ausgerichtet werden können.

Bevorzugt weist das Spiegelelement eine vorbestimmte Krümmung auf. Diese Krümmung ermöglicht eine ideale Anzeige für den Fahrzeuginsassen, insbesondere den Fahrer, des Kraftfahrzeugs. Ein Grundkörper des Spiegelelements kann beispielsweise mit einem entsprechenden Werkzeug umgeformt werden, sodass der umgeformte Grundkörper die vorbestimmte Krümmung aufweist. In dem Werkzeug können entsprechende Strukturen vorgesehen sein, durch welche die Befestigungselemente hergestellt werden können. Diese Strukturen in dem Werkzeug können Löcher oder Spitzen sein, die sich beim Herstellungsprozess in das weiche Glas einpressen beziehungsweise in die das weiche Glas einfließen kann. Somit wird eine kostengünstige Herstellung des Combinerspiegels ermöglicht.

Eine erfindungsgemäße Anzeigevorrichtung für ein Kraftfahrzeug umfasst ein erfindungsgemäßes Spiegelelement und eine Halteeinrichtung zum Halten des Spiegelelements. Die Anzeigevorrichtung ist insbesondere als Kopf-oben-Anzeigevorrichtung beziehungsweise als Head-up Display ausgebildet.

Bevorzugt weist die Halteeinrichtung ein zu dem wenigstens einen Befestigungselement des Spiegelelements korrespondierendes Halteelement auf. Falls die Befestigungselemente als Erhebungen ausgebildet sind, kann die Halteeinrichtung korrespondierende Ausnehmungen aufweisen. Falls die Befestigungselemente als Ausnehmungen ausgebildet sind, kann die Halteeinrichtung korrespondierende Erhebungen aufweisen. Somit greifen die Befestigungselemente des Spiegelelements in die korrespondierenden Halteelemente der Halteeinrichtung ein. Somit kann eine zuverlässige mechanische Verbindung zwischen dem Spiegelelement und der Halteeinrichtung garantiert werden.

Ein erfindungsgemäßes Kraftfahrzeug umfasst eine erfindungsgemäße Anzeigevorrichtung. Insbesondere ist die Anzeigevorrichtung derart in und/oder an dem Kraftfahrzeug angeordnet, dass mit der Anzeigevorrichtung eine Anzeige für den Fahrer des Kraftfahrzeugs bereitgestellt werden kann. Das Kraftfahrzeug ist insbesondere als Personenkraftwagen ausgebildet.

Ein erfindungsgemäßes Verfahren dient zum Herstellen einer Anzeigevorrichtung, insbesondere einer Kopf-oben-Anzeigevorrichtung, für ein Kraftfahrzeug. Hierbei wird ein Grundkörper für ein Spiegelelement bereitgestellt, welcher zumindest teilweise aus einem Glas gebildet ist. Ferner wird der Grundkörper zumindest in einem Haltebereich auf eine Temperatur oberhalb einer Glasübergangstemperatur erwärmt. Zudem wird mittels eines Werkzeugs wenigstens ein Befestigungselement in den Haltebereich des Grundkörpers eingeformt, wobei das Befestigungselement auf einer ersten Seite des Grundkörpers als Erhebung und auf einer der ersten gegenüberliegenden, zweite Seite des Grundkörpers als Ausnehmung ausgebildet ist.

Zum Herstellen des Spiegelelements wird ein Grundkörper bereitgestellt, der insbesondere vollständig aus einem Glas, beispielsweise einem Mineralglas, gebildet ist. Dieser Grundkörper wird über die Glasübergangstemperatur des Glases erhitzt. Somit kann mit Hilfe eines Werkzeugs eine Mehrzahl von Befestigungselementen im Haltebereich des Grundkörpers angebracht werden. Der Grundkörper, in dem die Befestigungselemente in den Haltebereich eingebracht sind, bildet dann das Spiegelelement beziehungsweise den Combinerspiegel. Dabei kann es auch vorgesehen sein, dass das Werkzeug dazu dient, den Grundkörper entsprechend umzuformen. Beispielsweise kann der Grundkörper derart umgeformt werden, dass er eine vorbestimmte Krümmung aufweist.

In einer weiteren Ausführungsform wird das Werkzeug zum Einformen des wenigstens einen Befestigungselements in den Grundkörper gedrückt. Das Werkzeug kann beispielsweise zwei Schalen umfassen, zwischen die der Grundkörper im weichen Zustand eingebracht wird. Die beiden Schalen können mit einer vorbestimmten Kraft aufeinander zu bewegt werden. Somit kann der Grundkörper entsprechend umgeformt werden und somit die Befestigungselemente bereitgestellt werden.

In einer alternativen Ausführungsform wird der Grundkörper zum Einformen des wenigstens einen Befestigungselements auf das Werkzeug gelegt. Das Werkzeug kann in diesem Fall eine entsprechende Negativstruktur für die Befestigungselemente aufweisen. Infolge der Schwerkraft, die auf den weichen Grundkörper aus Glas wirkt, fließen die Negativstrukturen des Werkzeugs in den Grundkörper hinein.

Bevorzugt wird zum Bereitstellen einer Halteeinrichtung der Anzeigevorrichtung das wenigstens eine Befestigungselement des Spiegelelements mit einem Material, insbesondere einem Kunststoff, umspritzt. In dem vorliegenden Beispiel wird also die Halteeinrichtung aus einem Material, insbesondere einem Kunststoff, hergestellt. Durch das Umspritzen der Befestigungselemente kann sichergestellt werden, dass die Halteeinrichtung fest mit dem Spiegelelement verbunden ist. Somit kann eine zuverlässige mechanische Verbindung zwischen der Halteeinrichtung und dem Spiegelelement bereitgestellt werden, die auch bei Vibrationen oder Schlägen einen sicheren Halt bietet. Ferner werden weder Klebe- noch Schraubverbindungen benötigt, um das Spiegelelement mit der Halteeinrichtung mechanisch zu verbinden.

Die mit Bezug auf das erfindungsgemäßen Spiegelelement vorgestellten bevorzugten Ausführungsformen und deren Vorteile gelten entsprechend für die erfindungsgemäße Anzeigevorrichtung, das erfindungsgemäße Kraftfahrzeug sowie für das erfindungsgemäße Verfahren und umgekehrt.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine ausschnittsweise Darstellung eines Kraftfahrzeugs mit einer Anzeigevorrichtung, die ein Spiegelelement aufweist;
- Fig. 2: das Spiegelelement in einer ersten Ausführungsform;
- Fig. 3: das Spiegelelement in einer zweiten Ausführungsform; und
- Fig. 4 und 5: das Spiegelelement in einer dritten Ausführungsform.

In den Figuren werden gleiche und funktionsgleiche Elemente mit den gleichen Bezugszeichen versehen.

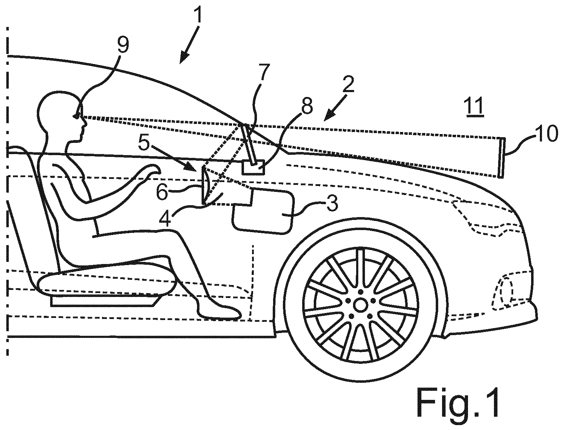

Fig. 1 zeigt eine ausschnittsweise Darstellung eines Kraftfahrzeugs 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst eine Anzeigevorrichtung 2. Die Anzeigevorrichtung 2 ist in dem vorliegenden Ausführungsbeispiel als Kopf-oben-Anzeigevorrichtung beziehungsweise als Head-up Display ausgebildet.

Die Anzeigevorrichtung 2 umfasst eine Bilderzeugungseinrichtung 3. Mittels der Bilderzeugungseinrichtung 3 kann Licht 4 abgestrahlt werden. Insbesondere kann mit der Bilderzeugungseinrichtung 3 ein Bild bereitgestellt werden. Die Bilderzeugungseinrichtung 3 kann beispielsweise einen entsprechenden Bildschirm aufweisen, mit dem das Bild bereitgestellt werden kann beziehungsweise mit dem das Licht 4 abgestrahlt werden kann. Darüber hinaus umfasst die Anzeigevorrichtung 2 eine Optikeinrichtung 5. Die Optikeinrichtung 5 umfasst in dem vorliegenden Ausführungsbeispiel einen Spiegel 6. Das von der Bilderzeugungseinrichtung 3 abgestrahlte Licht 4 trifft zunächst auf den Spiegel 6 und anschließend auf ein Spiegelelement 7. Die Bilderzeugungseinrichtung 3 und die Optikeinrichtung 5 sind vorliegend innerhalb eines Armaturenbretts des Kraftfahrzeugs 1 angeordnet.

Das Spiegelelement 7 kann auch als Combinerspiegel oder als Combiner bezeichnet werden. Das Spiegelelement 7 weist eine Spiegelfläche auf und ist semitransparent ausgebildet. Das Spiegelelement 7 ist aus einem Glas, insbesondere einem Mineralglas, gebildet. Das Licht 4, das von der Bilderzeugungseinrichtung 3 abgestrahlt wird, wird mittels der Optikeinrichtung 5 auf das Spiegelelement 7 projiziert. Ferner wird das Licht 4, das auf das Spiegelelement 7 projiziert wird, zu den Augen 9 eines Fahrers des Kraftfahrzeugs 1 reflektiert. Somit überlagert sich diese Anzeige mit dem Licht, das von einem Umgebungsbereich 11 des Kraftfahrzeugs 1 zu den Augen 9 des Fahrers gelangt, mit dem Licht 4, das auf das Spiegelelement 7 projiziert wird. Für den Fahrer des Kraftfahrzeugs 1 ergibt sich somit eine virtuelle Anzeige 10 beziehungsweise ein virtuelles Bild.

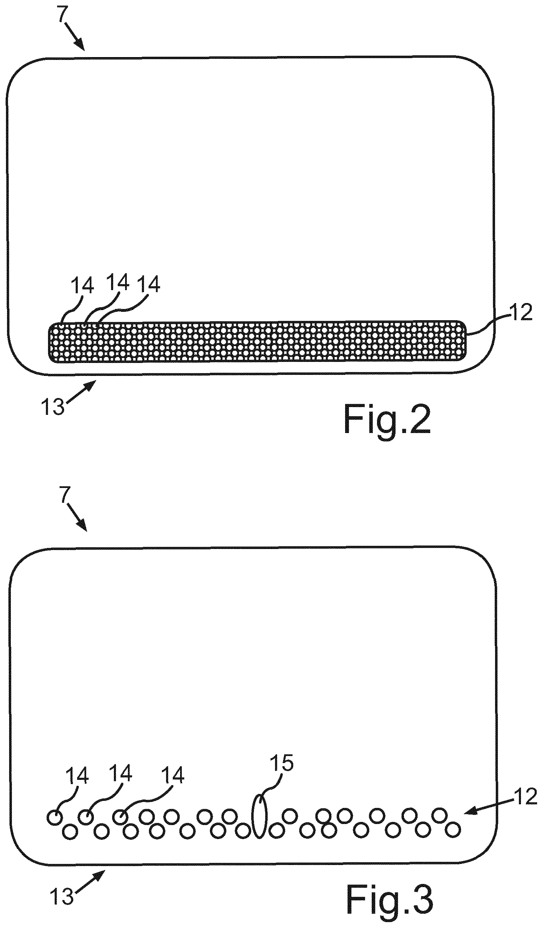

Fig. 2 zeigt eine Ausführungsform des Spiegelelements 7 in einer Draufsicht. Das Spiegelelement 7 beziehungsweise der Combinerspiegel ist im Wesentlichen plattenförmig ausgebildet, wobei das Spiegelelement 7 abgerundete Ecken aufweist. Das Spiegelelement 7 weist einen Haltebereich 12 auf. In dem Haltebereich 12 kann das Spiegelelement 7 mit einer Halteeinrichtung 8 gehalten werden. Der Haltebereich ist einem unteren Randbereich 13 des Spiegelelements 7 zugeordnet.

In dem Haltebereich 12 weist das Spiegelelement 7 eine Mehrzahl von Befestigungselementen 14 auf. In dem vorliegenden Ausführungsbeispiel sind die Befestigungselemente 14 als Mikrostrukturen ausgebildet, das heißt die Befestigungselemente 14 weisen Abmessungen im Mikrometerbereich auf.

Die Befestigungselemente 14 können beispielsweise durch einen entsprechenden Umformprozess hergestellt werden. Hierzu kann ein Grundkörper aus Glas, aus welchem das Spiegelelement 7 gefertigt wird, über seine Glasübergangstemperatur erhitzt werden. Anschließend kann das Werkzeug, das entsprechende Strukturelemente aufweist, in den Glasgrundkörper eingedrückt werden. Alternativ dazu kann der Glasgrundkörper auf das Werkzeug gelegt werden.

Die Halteeinrichtung 8 kann dadurch hergestellt werden, dass die Befestigungselemente mit einem entsprechenden Kunststoff umspritzt werden. Die Halteeinrichtung 8 kann dann auf beiden Seiten des Spiegelelements 7 und in dem unteren Randbereich 13 des Spiegelelements 7 angeordnet sein. Somit kann eine zuverlässige mechanische Verbindung zwischen dem Spiegelelement 7 und der Halteeinrichtung 8 bereitgestellt werden.

Fig. 3 zeigt das Spiegelelement 7 in einer weiteren Ausführungsform. Hier weisen die Befestigungselemente im Vergleich zu der Ausführungsform gemäß Fig. 2 größere Abmessungen auf. Ferner weist das Spiegelelement 7 in dem Haltebereich 12 ein Justageelement 15 auf. Dieses Justageelement 15 dient insbesondere als Zentrierung für Werkzeuge, die im späteren Herstellungsprozess an dem Spiegelelement 7 angeordnet werden.

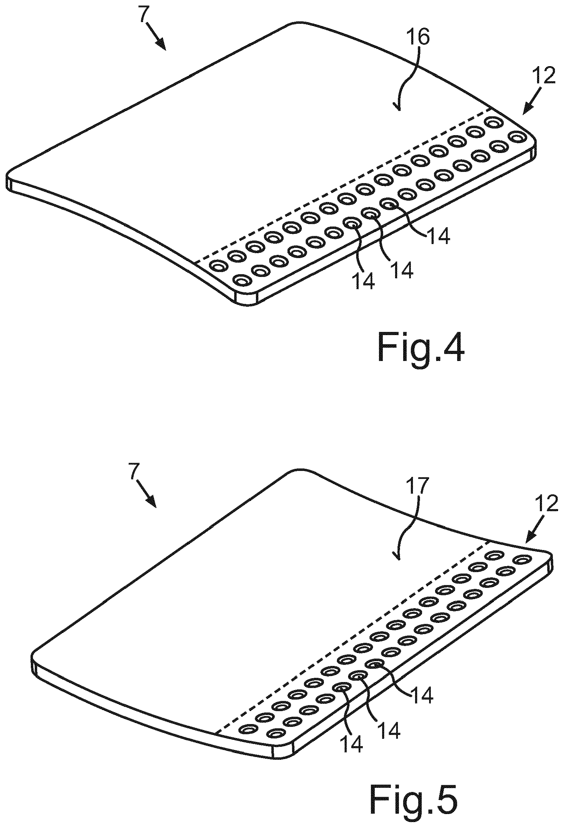

Fig. 4 zeigt das Spiegelelement 7 einer weiteren Ausführungsform. In der Perspektivansicht ist zu erkennen, dass das Spiegelelement 7 eine vorbestimmte Krümmung aufweist. Fig. 4 zeigt eine erste Seite 16 des Spiegelelements 7. Auf der ersten Seite 16 sind die Befestigungselemente in dem Haltebereich 12 als Erhebungen ausgebildet. Auf der der ersten Seite 16 gegenüberliegenden zweiten Seite 17, die in Fig. 5 dargestellt ist, sind die Befestigungselemente 14 in dem Haltebereich 12 als Ausnehmungen ausgebildet.

Durch die Befestigungselemente 14 des Spiegelelements 7 und die dazu korrespondierenden Halteelemente der Halteeinrichtung 8 kann eine zuverlässige mechanische Verbindung zwischen dem Spiegelelement 7 und der Halteeinrichtung 8 bereitgestellt werden. Zudem kann die Anzeigevorrichtung 2 kostengünstig hergestellt werden.

## Patentansprüche

1. Spiegelelement (7) für eine Anzeigevorrichtung (2), insbesondere für eine Kopf-oben-Anzeigevorrichtung, eines Kraftfahrzeugs (1), wobei das Spiegelelement (7) eine semitransparente Spiegelfläche aufweist, das Spiegelelement (7) zumindest teilweise aus einem Glas gebildet ist und das Spiegelelement (7) einen Haltebereich (12) aufweist, der sich koplanar zur Spiegelfläche erstreckt und an welchem eine Halteeinrichtung (8) zum Halten des Spiegelelements (7) der Anzeigevorrichtung (2) anordenbar ist,
**dadurch gekennzeichnet, dass**
das Spiegelelement (7) in dem Haltebereich (12) wenigstens ein eingeformtes Befestigungselement (14) aufweist, welches auf einer ersten Seite (16) des Spiegelelements (7) als Erhebung und auf einer der ersten gegenüberliegenden, zweite Seite des Spiegelelements (7) als Ausnehmung ausgebildet ist.

2. Spiegelelement (7) nach Anspruch 1,
**dadurch gekennzeichnet, dass**
das wenigstens eine Befestigungselement (14) als Mikrostruktur ausgebildet ist.

3. Spiegelelement (7) nach einem der vorhergehenden Ansprüche,
**dadurch gekennzeichnet, dass**
der Haltebereich (12) genau einem Randbereich (13) des Spiegelelements (7) zugeordnet ist.

4. Spiegelelement (7) nach einem der vorhergehenden Ansprüche,
**dadurch gekennzeichnet, dass**
das Spiegelelement (7) ein Justageelement (15) zum Justieren eines Werkzeugs aufweist, welches innerhalb des Haltebereichs (12) angeordnet und als Erhebung oder als Ausnehmung ausgebildet ist.

5. Spiegelelement (7) nach einem der vorhergehenden Ansprüche,
**dadurch gekennzeichnet, dass**
das Spiegelelement (7) eine vorbestimmte Krümmung aufweist.

6. Anzeigevorrichtung (2) für ein Kraftfahrzeug (1), welche als Kopf-oben-Anzeigevorrichtung ausgebildet ist, mit einem Spiegelelement (7) nach einem der vorhergehenden Ansprüche und mit einer Halteeinrichtung (8) zum Halten des Spiegelelements (7).

7. Anzeigevorrichtung (2) nach Anspruch 6,
**dadurch gekennzeichnet, dass**
die Halteeinrichtung (8) ein zu dem wenigstens einen Befestigungselement (14) des Spiegelelements (7) korrespondierendes Halteelement aufweist.

8. Kraftfahrzeug (1) mit einer Anzeigevorrichtung (2) nach Anspruch 6 oder 7.

9. Verfahren zum Herstellen einer Anzeigevorrichtung (2), insbesondere einer Kopf-oben-Anzeigevorrichtung, für ein Kraftfahrzeug (1), bei welchem ein Grundkörper für ein Spiegelelement (7) nach einem der Ansprüche 1 - 5 bereitgestellt wird, welcher zumindest teilweise aus einem Glas gebildet ist, wobei der Grundkörper zumindest in einem Haltebereich (12) auf eine Temperatur oberhalb einer Glasübergangstemperatur erwärmt wird und mittels eines Werkzeugs wenigstens ein Befestigungselement (14) in den Haltebereich (12) des Grundkörpers eingeformt wird, welches auf einer ersten Seite des Grundkörpers als Erhebung und auf einer der ersten gegenüberliegenden, zweite Seite des Grundkörpers als Ausnehmung ausgebildet ist.

10. Verfahren nach Anspruch 9,
**dadurch gekennzeichnet, dass**
das Werkzeug zum Einformen des wenigstens einen Befestigungselements (14) in den Grundkörper gedrückt wird.

11. Verfahren nach Anspruch 9,
**dadurch gekennzeichnet, dass**
das der Grundkörper zum Einformen des wenigstens einen Befestigungselements (14) auf das Werkzeug gelegt wird.

12. Verfahren nach einem der Ansprüche 9 bis 11,
**dadurch gekennzeichnet, dass**
zum Breitstellen einer Halteeinrichtung (8) der Anzeigevorrichtung (2) das wenigstens eine Befestigungselement (14) des Spiegelelements (7) mit einem Kunststoff umspritzt wird.

## Claims

1. Mirror element (7) for a display apparatus (2), in particular for a head-up display apparatus, of a motor vehicle (1), wherein the mirror element (7) has a semitransparent mirror surface, the mirror element (7) is at least partially formed from a glass and the mirror element (7) has a holding region (12) which extends in a co-planar manner with respect to the mirror surface and on which a holding device (8) for holding the mirror element (7) of the display apparatus (2) can be arranged,
**characterized in that**
the mirror element (7) has, in the holding region (12), at least one moulded fastening element (14) which is in the form of a raised portion on a first side (16) of the mirror element (7) and is in the form of a recess on a second side of the mirror element (7), which second side is opposite the first side.

2. Mirror element (7) according to Claim 1,
**characterized in that**
the at least one fastening element (14) is in the form of a microstructure.

3. Mirror element (7) according to either of the preceding claims,
**characterized in that**
the holding region (12) is associated with precisely one edge region (13) of the mirror element (7).

4. Mirror element (7) according to one of the preceding claims,
**characterized in that**
the mirror element (7) has an adjustment element (15) for adjusting a tool which is arranged within the holding region (12) and is in the form of a raised portion or in the form of a recess.

5. Mirror element (7) according to one of the preceding claims,
**characterized in that**
the mirror element (7) has a predetermined curvature.

6. Display apparatus (2) for a motor vehicle (1) which is in the form of a head-up display apparatus, comprising a mirror element (7) according to one of the preceding claims and comprising a holding device (8) for holding the mirror element (7).

7. Display apparatus (2) according to Claim 6,
**characterized in that**
the holding device (8) has a holding element which corresponds to the at least one fastening element (14) of the mirror element (7).

8. Motor vehicle (1) comprising a display apparatus (2) according to Claim 6 or 7.

9. Method for producing a display apparatus (2), in particular a head-up display apparatus, for a motor vehicle (1), in which a main body for a mirror element (7) according to one of Claims 1-5 is provided, which mirror element is at least partially formed from a glass, wherein the main body, at least in a holding region (12), is heated to a temperature above a glass transition temperature and, by means of a tool, at least one fastening element (14) is moulded into the holding region (12) of the main body, which fastening element is in the form of a raised portion on a first side of the main body and is in the form of a recess on a second side of the main body, which second side is opposite the first side.

10. Method according to Claim 9,
**characterized in that**
the tool, for moulding the at least one fastening element (14), is pushed into the main body.

11. Method according to Claim 9,
**characterized in that**
the main body, for moulding the at least one fastening element (14), is placed onto the tool.

12. Method according to one of Claims 9 to 11,
**characterized in that**,
for providing a holding device (8) of the display apparatus (2), the at least one fastening element (14) of the mirror element (7) is encapsulated by injection moulding with a plastic.

## Revendications

1. Élément de miroir (7) pour un dispositif d'affichage (2), en particulier pour un dispositif d'affichage tête haute, d'un véhicule à moteur (1), dans lequel l'élément de miroir (7) comporte une surface de miroir, l'élément de miroir (7) est formé au moins partiellement par une vitre et l'élément de miroir (7) comporte une zone de maintien (12), laquelle s'étend de manière coplanaire à la surface de miroir et à laquelle un dispositif de maintien (8) peut être agencé pour maintenir l'élément de miroir (7) du dispositif d'affichage (2),
**caractérisé en ce que** l'élément de miroir (7) comporte dans la zone de maintien (12) au moins un élément de fixation formé (14), lequel est conçu d'un premier côté (16) de l'élément de miroir (7) comme protubérance et d'un deuxième côté de l'élément de miroir (7) opposé au premier comme évidement.

2. Élément de miroir (7) selon la revendication 1,
**caractérisé en ce que** l'au moins un élément de fixation est réalisé comme microstructure.

3. Élément de miroir (7) selon l'une des revendications précédentes,
**caractérisé en ce que** la zone de maintien (12) est ordonnée à exactement une zone de bordure (13) de l'élément de miroir (7).

4. Élément de miroir (7) selon l'une des revendications précédentes,
**caractérisé en ce que** l'élément de miroir (7) est un élément d'ajustage (15) pour l'ajustage d'un outil, lequel est agencé à l'intérieur de la zone de maintien (12) et est réalisé comme protubérance ou comme évidement.

5. Élément de miroir (7) selon l'une des revendications précédentes,
**caractérisé en ce que** l'élément de miroir (7) possède une courbure prédéterminée.

6. Dispositif d'affichage (2) pour un véhicule à moteur (1), lequel est réalisé comme dispositif d'affichage tête haute, doté d'un élément de miroir (7) selon l'une des revendications précédentes et d'un dispositif de maintien (8) pour maintenir l'élément de miroir (7).

7. Dispositif d'affichage (2) selon la revendication 6,
**caractérisé en ce que** le dispositif de maintien (8) comporte un élément de maintien correspondant à l'au moins un élément de fixation (14) de l'élément de miroir (7) .

8. Véhicule à moteur (1) doté d'un dispositif d'affichage (2) selon la revendication 6 ou 7.

9. Procédé de fabrication d'un dispositif d'affichage (2), en particulier d'un dispositif d'affichage tête haute, pour un véhicule à moteur (1), lors duquel un corps de base pour un élément de miroir (7) selon l'une des revendications 1 - 5 est préparé, lequel est formé au moins partiellement d'une vitre, dans lequel le corps de base est chauffé au moins dans une zone de maintien (12) à une température supérieure à une température de transition vitreuse et au moins un élément de fixation (14) dans la zone de maintien (12) du corps de base est mis en forme au moyen d'un outil, lequel est conçu d'un premier côté du corps de base comme protubérance et d'un deuxième côté du corps de base opposé au premier comme évidement.

10. Procédé selon la revendication 9,
**caractérisé en ce que** l'outil de mise en forme de l'au moins un élément de fixation (14) est pressé dans le corps de base.

11. Procédé selon la revendication 9,
**caractérisé en ce que** le corps de base est posé sur l'outil pour la mise en forme de l'au moins un élément de fixation (14).

12. Procédé selon l'une des revendications 9 à 11,
**caractérisé en ce que**, pour la fourniture d'un dispositif de maintien (8) du dispositif d'affichage (2), l'au moins un élément de fixation (14) de l'élément de miroir (7) est surmoulé avec une matière plastique.
